## Europäisches Patentamt

## European Patent Office

## Office européen des brevets

(11) Veröffentlichungsnummer: **0 422 378 A1**

# (12) EUROPÄISCHE PATENTANMELDUNG

(21) Anmeldenummer: 90116741.1

(22) Anmeldetag: 31.08.90

(51) Int. Cl.5: **C21D 1/26, C21D 1/32**

(30) Priorität: 12.10.89 DE 3934037

(43) Veröffentlichungstag der Anmeldung:
17.04.91 Patentblatt 91/16

(84) Benannte Vertragsstaaten:
**AT BE CH DE ES FR GB IT LI LU NL SE**

(71) Anmelder: **Thyssen Stahl Aktiengesellschaft**
**Kaiser-Wilhelm-Strasse 100**
**W-4100 Duisburg 11(DE)**

(72) Erfinder: **Hollenberg, Lutz**

**Lorbeerweg 13**
**W-4230 Wesel(DE)**
Erfinder: **Lang, Cestmir, Dr. Ing.**
**Lützowstrasse 96**
**W-4200 Oberhausen 11(DE)**
Erfinder: **Müschenborn, Wolfgang, Dr. Ing.**
**Giselastrasse 3 b**
**W-4220 Dinslaken(DE)**

(74) Vertreter: **Cohausz & Florack Patentanwälte**
**Postfach 14 01 61 Schumannstrasse 97**
**W-4000 Düsseldorf 1(DE)**

(54) **Verfahren zur Verbesserung der Kaltumformbarkeit vergütbarer Stähle.**

(57) Die Erfindung betrifft ein Verfahren zur Verbesserung der Kaltumformbarkeit von warm- oder kaltgewalzten vergütbaren Stählen.

Kennzeichen der Erfindung ist, daß bei einer Zusammensetzung von mit (in Gew.-%)

| | |
|---|---|
| 0,32 - | 0,54 % C |
| 0,05 - | 0,40 % Mn |
| 0,41 - | 1,5 % Si |
| 0,02 - | 0,15 % Al |
| maximal | 0,05 % Cr |
| maximal | 0,05 % S |
| maximal | 0,03 % P |
| maximal | 0,02 % N |
| Rest Eisen und unvermeidbare Verunreinigungen | |

vor dem abschließenden Kaltverformen und Vergüten zu einer nahezu vollständigen Graphitisierung mindestens 15 Stunden bei Temperaturen zwischen 620 und 680 °C geglüht wird, während bei einer Zusammensetzung aus

EP 0 422 378 A1

| 0,55 - | 1,3 % C |
|---|---|
| 0,20 - | 0,30 % Mn |
| 0,41 - | 0,90 % Si |
| 0,02 - | 0,15 % Al |
| maximal | 0,05 % Cr |
| maximal | 0,010 % S |
| maximal | 0,03 % P |
| maximal | 0,02 % N |
| Rest Eisen und unvermeidbare Verunreinigungen | |

diese Glühung mindestens 8 Stunden beträgt.

## VERFAHREN ZUR VERBESSERUNG DER KALTUMFORMBARKEIT VERGÜTBARER STÄHLE

Die Erfindung betrifft ein Verfahren zur Verbesserung der Kaltumformbarkeit vergütbarer Stähle mit einer Zusammensetzung gemäß den Ansprüchen 1 und 2.

Sofern nichts anderes angegeben ist, sind alle %-Angaben Gew.-%.

Vergütbare Stähle mit den angegebenen Kohlenstoffgehalten von 0,3 bis 0,54 bzw. 0,55 bis 1,3 % sowie Mangangehalten von ca. 0,5 bis 0,9 %, Siliziumgehalten von max. 0,4 % und Schwefel- und Phosphorgehalten von max. 0,045 % werden in Form von Blech, Band, Draht oder Formstahl sowohl im warmgewalzten Zustand als auch nach dem Kaltwalzen oder Kaltziehen in großem Umfang durch Kaltumformen, wie Biegen, Abkanten, Richten, Wickeln, Stanzen, Tiefziehen und Kaltfließpressen, weiterverarbeitet. An den erzeugten Fertigteilen aus diesen Stählen wird üblicherweise eine Vergütungsbehandlung durch Härten und Anlassen zur Einstellung der geforderten Festigkeits- und Härtewerte vorgenommen.

Die durch Warmwalzen dieser Stähle hergestellten Vorprodukte besitzen aufgrund der hohen Kohlenstoffgehalte ein perlitisch-ferritisches (bei rund 0,8 % C) oder perlitisches Gefüge (bei mehr als 0,8 % C), wobei der Perlit lamellar ausgebildet ist.

Sie weisen hohe Zugfestigkeitswerte und niedrige Bruchdehnungswerte auf. Bisher hat man versucht, diese für die Kaltumformbarkeit ungünstigen Kennwerte durch eine Weichglühung im Temperaturbereich von etwa 690 bis 720 °C zu verbessern. Mit dem Begriff "Kaltumformbarkeit" wird die Fähigkeit des Materials gekennzeichnet, eine bleibende Formänderung ohne vorausgegangene Erwärmung zu erfahren, wie z.B. beim Biegen, Tiefziehen, Streckziehen oder Kaltfließpressen. Im allgemeinen führen niedrige Festigkeits- und hohe Bruchdehnungswerte zu einer verbesserten Kaltumformbarkeit.

Beim Weichglühen während einer Zeit von mehreren Stunden wird der lamellare perlitische Zementit in eine kugelige Form überführt, was eine Absenkung der Zugfestigkeit und eine Erhöhung der Bruchdehnung zur Folge hat.

Die Einformung des perlitischen Zementits wird als eine notwendige Voraussetzung zur Verbesserung der Eigenschaften für die nachfolgenden Kaltumformvorgänge angesehen. Für die Verbesserung der Kaltumformbarkeit ist es weiterhin wichtig, daß der eingeformte Zementit möglichst grob vorliegt; je gröber die Zementit-Teilchen sind, desto höher ist die Kaltumformbarkeit.

Zur Verbesserung der Kaltumformbarkeit hat man ferner ein langsames Erhitzen von warm- und kaltgewalzten Vorprodukten und eine langsame Abkühlung im Zweiphasen-Gebiet (Austenit + Perlit) bei Temperaturen zwischen 730 und 760 °C empfohlen (Metal Progress 64, 1953, No. 7, Seite 79/82). Bei diesem Weichglühverfahren bewirkt aber der insgesamt feine kugelige Zementit eine Ausscheidungshärtung, die eine Verschlechterung der Kaltumformbarkeit zur Folge hat.

Aus der DE-PS 37 21 641 ist ein Verfahren zur Herstellung von Warmband aus unlegierten oder niedriglegierten Stählen mit 0,3 bis 0,9 % C bekannt, bei dem durch eine Verlagerung der Austenit/Perlit-Umwandlung vom Auslaufrollgang der Warmbandstraße in das aufgewickelte Coil ein groblamellarer Perlit mit herabgesetzter Festigkeit erzielt wird. Trotz einer Absenkung der Zugfestigkeit auf Werte zwischen 500 und 780 N/mm$^2$ wird die Kaltumformbarkeit durch dieses Verfahren nur geringfügig beeinflußt.

Der Erfindung liegt nun die Aufgabe zugrunde, die Kaltumformbarkeit vergütbarer Stähle mit Kohlenstoffgehalten im Bereich von 0,3 bis 0,54 % und 0,55 bis 1,3 % so zu erhöhen, daß aus den Vorprodukten dieser Stähle auch schwierig kaltumformbare Teile hergestellt werden können.

Diese Aufgabe wird erfindungsgemäß durch die Merkmale des Anspruchs 1 gelöst.

Aus der DE-PS 37 21 641 sind vergütbare Stähle bekannt, die wie die für das erfindungsgemäße Verfahren verwendeten Stähle zusammengesetzt sein können.

Die für das erfindungsgemäße Verfahren geeigneten Stähle können zusätzlich noch eines oder mehrere der im Anspruch 2 genannten Elemente bis zu den dort jeweils angegebenen Höchstwerten enthalten.

Der Stahl wird nach dem Graphitisierungsglühen und Kaltumformen durch austenitisierendes Glühen mit einer Mindesthaltezeit von 10 min bei einer Temperatur von 850°C oder höher und anschließendes Anlassen vergütet.

Beim erfindungsgemäßen Verfahren wird davon Gebrauch gemacht, daß perlitisch-ferritische und perlitische Stähle mit der in den Ansprüchen genannten Zusammensetzung eine Umwandlung des lamellaren perlitischen Zementits in Graphit ermöglichen. Der Vorteil dieser Umwandlung liegt darin, daß die Graphitpartikel deutlich größer sind als die Zementit-Teilchen und dadurch keine Ausscheidungshärtung stattfinden kann. Dies führt zu einer starken Absenkung der Festigkeit und zu einer Verbesserung der Kaltumformbarkeit bis auf das Niveau von bekanntem weichen Kaltband mit rund 0,06 % C.

Dem Mangangehalt wird im Hinblick auf die Graphitbildung eine doppelte Wirkung zugeschrieben. Einerseits senkt es die Ac1-Temperatur und stabilisiert den Zementit. Daher muß der Mangangehalt auf

3

EP 0 422 378 A1

maximal 0,4 % begrenzt werden. Höhere Mangangehalte führen zu einer Unterdrückung der Graphitbildung. Andererseits ist ein Mindestgehalt von 0,05 % im Stahl von großer Bedeutung im Hinblick auf die MnS-Bildung, da die Mangansulfide als Keime für die Graphitbildung wirken. Für eine vollständige MnS-Bildung im Stahl muß ein Mindestverhältnis von Mn : S größer 10 vorliegen.

Bei der Keimbildung des Graphits spielt der Aluminiumgehalt des Stahles eine große Rolle. Als potentielle Keime für die Graphitbildung dienen neben dem bereits erwähnten MnS sowohl $Al_2O_3$ als auch AlN. Die $Al_2O_3$-Teilchen bilden sich bereits bei der Erstarrung der Schmelze und bleiben von den weiteren thermomechanischen Behandlungen des Stahles weitgehend unbeeinflußt. AlN kann sich entweder bei der Abkühlung aus der Walztemperatur oder während einer Glühung im Bereich von 620 bis 680 °C noch vor dem Graphit bilden und dadurch als Keimbildner der Graphitpartikel eine Zementit-Graphit-Umwandlung begünstigen. Aus Gründen einer vollständigen Sauerstoff- und Stickstoffabbindung beträgt der untere Aluminiumgehalt 0,02 %, während die obere Grenze erfindungsgemäß bei 0,15 % liegt. Bei höheren Aluminiumgehalten bildet sich insgesamt eine geringere Anzahl von deutlich gröberen Aluminiumoxiden und Aluminiumnitriden. Da diese Partikel als Keime für die Graphitausscheidung wirken, werden die Diffusionswege des Kohlenstoffs zu diesen Keimen länger, wodurch die Graphitbildung verzögert wird. Die obere Grenze des Aluminiumgehaltes wird daher auf 0,15 % begrenzt.

Bei der Graphitisierung spielt neben Mangan und Aluminium Silizium die bedeutendste Rolle. Sein starker Graphitisierungseffekt beruht sowohl auf dem Anstieg der Ac1-Temperatur als auch auf der Verminderung der Stabilität des Zementits. Der Anstieg der Ac1-Temperatur beschleunigt die Kohlenstoff-Diffusion zu den Graphitkeimen, und die verminderte Stabilität des Zementit sorgt für einen raschen Ablauf der Umwandlung in Graphit. Der untere Siliziumgehalt liegt bei 0,15 %; der Ausnutzung hoher Siliziumgehalte steht die Mischkristallverfestigung durch gelöste Silizium-Atome entgegen. Erfahrungsgemäß ergibt sich eine Streckgrenzensteigerung von rund 60 N/mm² pro 1 % Si. Der obere Siliziumgehalt wird daher auf 1,5 % festgelegt.

Für die erfindungsgemäßen Glühbedingungen hängt der Graphitisierungsablauf auch vom Kohlenstoffgehalt des Stahles ab. Bei Gehalten zwischen 0,32 und 0,54 % C läuft die Umwandlung in Graphit langsamer ab als bei höheren Kohlenstoffgehalten. Dies ist darauf zurückzuführen, daß bei niedrigem Kohlenstoffgehalt weniger Zementitpartikel vorliegen und dadurch die Diffusionswege der Kohlenstoffatome zu den Graphitkeimen zu lang sind. Die Glühung bei 620 bis 680 °C zur Graphitisierung beträgt daher erfindungsgemäß mindestens 15 h (Anspruch 1), während für Kohlenstoffgehalte von 0,55 bis 1,3 % die Glühzeit bei 620 bis 680 °C erfindungsgemäß mindestens 8 h beträgt (Anspruch 2).

Gemäß Anspruch 1 ist bei den Stählen mit Kohlenstoffgehalten von 0,55 bis 1,3 Gew.% der Siliziumgehalt nach oben begrenzt, weil dadurch die Mischkristallhärtung, die eine Festigkeitsanhebung bedeutet, in Grenzen gehalten wird. Außerdem ermöglicht die obere Begrenzung des Mangangehaltes eine schnellere Graphitbildung. Schließlich läuft bei Kohlenstoffgehalten oberhalb 0,55 % bei gleicher Stahlzusammensetzung die Graphitbildung schneller ab als bei Stählen mit Kohlenstoffgehalten unter 0,55 %.

Besonders günstige Eigenschaften im Hinblick auf die Kaltumformbarkeit und das Verhalten beim Anlassen nach dem Härten stellen sich bei einer Stahlzusammensetzung nach Anspruch 1 mit den zusätzlichen Legierungsgehalten gemäß Anspruch 2 ein.

Als starker Carbidbildner reichert sich Chrom im Zementit an und stabilisiert ihn. Dadurch wird die Triebkraft der Graphitisierung stark herabgesetzt. Aus diesem Grunde werden im Stahl die Chromgehalte so niedrig wie möglich gehalten, und zwar auf Werte unter 0,05 %, die als Verunreinigungen gelten.

Nickel senkt ebenso wie Mangan die Ac1-Temperatur ab, seine Wirkung auf die Verringerung der Kohlenstoffaktivität ist deutlich schwächer als bei Mangan. Trotz dieser Tatsache fördert Nickel die Graphitisierung. Der Nickel-Einfluß ist in erster Linie auf einer Erhöhung der Graphitkeimbildung zurückzuführen.

Neben Nickel ist auch Molybdän indirekt ein graphitförderndes Element, dessen Wirkung auf einer Unterdrückung der Perlitumwandlung beruht. Bei der Abkühlung der molybdänhaltigen Stähle nach dem Walzen bildet sich verstärkt Bainit oder Martensit. Eine Graphitisierung von bainitisch-martensitischem Gefüge läuft schneller ab als im Falle einer perlitischen Gefügeausbildung.

Neben den Legierungselementen Nickel und Molybdän dienen Bor und Vanadium zur Erhöhung der Härtbarkeit, während Titan und Zirkonium zur Stickstoffabbindung oder zur Beeinflussung der Sulfidform benutzt werden.

Für die Graphitisierung des Stahles müssen wie bereits erwähnt neben der angegebenen Stahlzusammensetzung bestimmte Temperatur-Zeit-Zyklen eingehalten werden. Es hat sich überraschenderweise gezeigt, daß die höchste Geschwindigkeit der Umwandlung in Graphit im Temperaturbereich zwischen 620 und 680 °C vorliegt. Sowohl bei warmgewalzten als auch bei kaltgewalzten Erzeugnissen beträgt die Mindestzeit für eine Graphitisierung im Temperaturbereich von 620 bis 680 °C für die Stähle mit

4

Kohlenstoffgehalten zwischen 0,32 bis 0,54 % 15 h während sie für die Stähle mit Gehalten von 0,55 bis 1,3 % C 8 h beträgt. Die Richtwerte des Graphitflächenanteils bewegen sich bei Stählen mit Kohlenstoffgehalten von rund 0,45 % bei 1,0 bis 1,5 %, bei Stählen mit 0,75 % C zwischen 2,0 und 2,5 %. Diese Flächenanteile ergeben sich, wenn eine quantitative Messung mit Hilfe eines automatischen Bildanalysators durchgeführt wird.

Im Gegensatz zu weichen warm- und kaltgewalzten Stählen vergleichbarer Kaltumformbarkeit sind die graphitisierten Kohlenstoffstähle der angegebenen Zusammensetzung vergütbar, d.h. sie können nach dem Kaltumformen gehärtet und angelassen werden. Es zeigte sich, daß bei leicht angehobener Austenitisierungstemperatur von 850 °C und höher sowie bei einer Haltezeit von mindestens 10 min bei dieser Temperatur der Graphit aufgelöst und damit eine gute Vergütbarkeit des Stahles ermöglicht wird.

Das nachfolgende Vergüten des Stahles erfolgt daher mit einer Austenitisierungstemperatur größer/gleich 850 °C bei einer Mindesthaltezeit von 10 min.

Die graphitisierbaren Stähle können zur Graphitrückbildung neigen, falls sie nach dem Härten auf höhere Temperaturen angelassen werden. In dieser Hinsicht sind Stähle mit niedrigem Siliziumgehalt von rund 0,45 % anfälliger als Stähle mit Siliziumgehalten über 0,7 %. Die niedrig Silizium-haltigen Stähle können nur bis 550 °C ohne Gefahr einer Graphitrückbildung und damit verbundenem Festigkeits-und Zähigkeitsverlust angelassen werden. Bei Stählen mit Siliziumgehalten über 0,7 % erhöht sich diese Grenze bis auf 600 °C.

Die Erfindung wird nachstehend anhand von Ausführungsbeispielen näher erläutert. Tafel 1 enthält die Übersicht der Stahlzusammensetzungen. Aus den unter A bis Q aufgeführten Stählen wurden warm- und kaltgewalzte Produkte wie Band, Draht und Profilstahl im Versuchsmaßstab hergestellt und wie in Tafel 2 angegeben geglüht. Bei einigen Versuchsstählen wurde die Härtbarkeit bei unterschiedlichen Austenitisierungsbedingungen überprüft (Tafel 3).

Die Stähle C, D, F, G, H, J, M, O, Q fallen unter die Erfindung. Die Stähle A und B fallen wegen eines zu hohen Cr- und Mn-Gehaltes sowie zu niedriger Al-Gehalte nicht unter die Erfindung. Analog dazu fallen die Stähle E, L, N, P (zu hoher Mn-Gehalt, zum Teil zu niedriger Al-Gehalt) sowie die Stähle I und K (zu hoher Si-Gehalt) nicht unter die Erfindung.

Aus den Werten von Tafel 2 wird ersichtlich, daß die unter die Erfindung fallenden Stähle wesentlich niedrigere Streckgrenzen- und Zugfestigkeitswerte sowie höhere Bruchdehnungswerte aufweisen als die Stähle, die nach dem bisherigen Verfahren, d.h. mit eingeformten Zementit und ohne Graphit hergestellt wurden.

In der letzten Spalte in Tafel 2 werden Richtwerte des Graphitflächenanteils angegeben. Nicht unter die Erfindung fallen die Stähle I und K, obwohl die beiden Stähle nach einer Glühung hohe Graphitflächenanteile aufweisen. Dies hängt damit zusammen, daß die Si-Gehalte beider Stähle mit 1,72 bzw. 1,65 % zu hoch liegen. Durch die Si-Mischkristallverfestigung werden die Festigkeit und die Bruchdehnungswerte abgesenkt, so daß diese Stähle nur geringe Vorteile im Vergleich zu herkömmlichen Stählen mit eingeformtem Zementit aufweisen.

Nicht unter die Erfindung fallen ebenfalls die Stähle D (Kaltband) und Q (Walzdraht). Bei diesen Produkten wurde die Glühzeit im Temperaturbereich von 620 bis 680 °C mit 5 bzw. 4 h zu kurz gewählt. Wegen einer graphitanfälligen Stahlzusammensetzung fand eine Teilgraphitisierung statt; die Glühzeit reichte jedoch nicht aus, um eine weitgehende Graphitisierung der Stähle sicherzustellen. Aus diesem Grunde wurde nur eine begrenzte Verbesserung der Kaltumformbarkeit erzielt.

Die Stähle J und M, bei denen die Härtbarkeit überprüft wurde, wurden einer Austenitisierungsbehandlung im Temperaturbereich zwischen 800 und 900 °C mit Haltezeiten von 3 bis 20 min unterworfen. Der Vergleich in Tafel 3 zeigt, daß Höchstabschreckhärten von rund 795 HV 30, die ein Maß für gute Härtbarkeit ist, nur bei einer Mindestaustenitisierungstemperatur von 850 °C und einer Mindesthaltezeit von 10 min erzielt wurde. Die mit niedrigeren Temperaturen und Haltezeiten austenitisierten Proben wiesen aufgrund einer unzureichenden Auflösung der Graphitpartikel geringe Abschreckhärtewerte auf und zeigten damit eine nicht ausreichende Härtbarkeit.

TAFEL 1

| | | | | | | | | | | | | | | | | | | Chemische Zusammensetzung |
|---|---|---|---|---|---|---|---|---|---|---|---|---|---|---|---|---|---|---|
| Erfindung | Bez. | C-Gehalt (Richtwert) % | Produkt* | C | Mn | Si | P | B | N | Al | Cr | Ni | Mo | V | Ti | Zr | Cu | B |
| | A | 0,35 | WB, KB | 0,38 | 0,86 | 0,16 | 0,012 | 0,012 | 0,0065 | 0,008 | 0,19 | - | - | - | - | - | - | - |
| | B | 0,35 | WD | 0,35 | 0,62 | 0,25 | 0,010 | 0,007 | 0,0048 | 0,006 | 0,070 | - | - | - | - | - | - | - |
| • | C | 0,35 | WB, KB | 0,36 | 0,28 | 0,45 | 0,018 | 0,008 | 0,0042 | 0,035 | 0,010 | - | - | - | 0,015 | - | 0,015 | 0,0035 |
| • | D | 0,45 | WB, KB | 0,44 | 0,22 | 0,69 | 0,016 | 0,009 | 0,0036 | 0,042 | 0,015 | - | - | 0,04 | - | - | - | - |
| | E | 0,45 | WB, KB | 0,46 | 0,71 | 0,25 | 0,007 | 0,010 | 0,0028 | 0,035 | 0,04 | - | - | - | - | - | - | - |
| • | F | 0,45 | WD, F | 0,47 | 0,18 | 0,71 | 0,012 | 0,014 | 0,0062 | 0,036 | 0,010 | - | 0,15 | - | - | - | - | - |
| • | G | 0,60 | WB, KB | 0,58 | 0,29 | 0,65 | 0,010 | 0,007 | 0,0028 | 0,035 | 0,015 | - | - | - | - | - | - | - |
| • | H | 0,60 | F | 0,60 | 0,22 | 0,56 | 0,014 | 0,004 | 0,0050 | 0,065 | 0,020 | 0,35 | - | - | - | 0,04 | 0,020 | - |
| | I | 0,60 | WB, KB | 0,59 | 0,24 | 1,72 | 0,018 | 0,008 | 0,0061 | 0,020 | 0,015 | - | - | - | - | - | - | - |
| • | J | 0,75 | WD | 0,75 | 0,16 | 0,43 | 0,009 | 0,003 | 0,0060 | 0,082 | 0,012 | - | - | - | 0,020 | - | - | - |
| | K | 0,75 | KB | 0,75 | 0,23 | 1,65 | 0,012 | 0,009 | 0,0049 | 0,045 | 0,008 | - | - | - | - | - | - | - |
| | L | 0,75 | WD | 0,76 | 0,57 | 0,22 | 0,016 | 0,012 | 0,0052 | 0,015 | 0,030 | - | - | - | - | - | - | - |
| • | M | 0,75 | WB, KB | 0,73 | 0,21 | 0,42 | 0,014 | 0,010 | 0,0042 | 0,048 | 0,017 | - | - | - | - | - | - | - |
| | N | 0,75 | F | 0,76 | 0,63 | 0,25 | 0,017 | 0,010 | 0,0035 | 0,006 | 0,020 | - | - | - | - | - | - | - |
| • | O | 0,85 | WB, KB | 0,85 | 0,22 | 0,72 | 0,019 | 0,006 | 0,0072 | 0,035 | 0,012 | - | - | - | - | - | - | - |
| | P | 0,85 | WB | 0,84 | 0,49 | 0,28 | 0,012 | 0,014 | 0,0046 | 0,004 | 0,015 | - | - | - | - | - | - | - |
| • | Q | 0,85 | WD | 0,86 | 0,30 | 0,68 | 0,010 | 0,015 | 0,0038 | 0,078 | 0,023 | - | - | - | - | - | - | - |
| Erläuterungen: | | | | | | | | | | | | | | | | | | |

* WB = Warmband

KB = Kaltband

WD = Walzdraht, kaltgezogener Draht

F = Formstahl

EP 0 422 378 A1

TAFEL 2

| Mechanische Eigenschaften der Stähle gemäß Tafel 1 nach einer Graphitisierungsglühung | | | | | | | | |
|---|---|---|---|---|---|---|---|---|
| Erfindung | Stahl | C-Gehalt (Richtwert) % | Produkt | Verweilzeit bei 620 - 680 Grad C (h) | $R_e l$ N/mm² | $R_m$ N/mm² | A 5 % | Grafitanteil im Stahl |
| | A | 0,35 | WB | 25 | 323 | 480 | 29.5 | - |
| | A | 0,35 | KB | 20 | 290 | 451 | 30.2 | - |
| | B | 0,35 | WD | 20 | 311 | 465 | 31.4 | - |
| * | C | 0,35 | WB | 25 | 235 | 404 | 34.2 | 0,7 |
| * | C | 0,35 | KB | 25 | 225 | 386 | 35.6 | 0,8 |
| * | D | 0,45 | WB | 22 | 242 | 379 | 31.2 | 1,2 |
| * | D | 0,45 | KB | 16 | 221 | 373 | 35.2 | 1,4 |
| | D | 0,45 | KB | 5 | 320 | 464 | 26.8 | 0,3 |
| | E | 0,45 | KB | 16 | 350 | 483 | 25.2 | - |
| * | F | 0,45 | WD | 30 | 246 | 382 | 36.2 | 1,2 |
| * | F | 0,45 | F | 24 | 248 | 393 | 34.3 | 1,1 |
| * | G | 0,60 | WB | 25 | 235 | 368 | 32.5 | 1,7 |
| * | G | 0,60 | KB | 25 | 228 | 370 | 33.0 | 1,8 |
| * | H | 0,60 | F | 18 | 243 | 362 | 32.2 | 1,6 |
| | I | 0,60 | WB | 15 | 282 | 495 | 26.3 | 2,0 |
| | I | 0,60 | KB | 15 | 234 | 507 | 28.2 | 2,0 |
| * | J | 0,75 | WD | 20 | 180 | 352 | 36.6 | 2,1 |
| | K | 0,75 | KB | 15 | 265 | 435 | 28.4 | 2,3 |
| | L | 0,75 | WD | 16 | 440 | 556 | 26.8 | - |
| * | M | 0,75 | KB | 3 | 325 | 478 | 25.6 | 0,8 |
| * | M | 0,75 | WB | 20 | 184 | 351 | 36.6 | 2,2 |
| * | M | 0,75 | KB | 10 | 178 | 359 | 32.4 | 2,4 |
| | M | 0,75 | F | 20 | 457 | 619 | 24.8 | - |
| * | O | 0,85 | KB | 20 | 192 | 365 | 34.2 | 2,8 |
| * | O | 0,85 | WB | 16 | 203 | 358 | 33.6 | 2,9 |
| | P | 0,85 | WB | 16 | 475 | 641 | 22.3 | - |
| * | Q | 0,85 | WD | 18 | 205 | 368 | 35.2 | 2,7 |
| | Q | 0,85 | WD | 4 | 382 | 545 | 24.6 | 0,6 |
| Erläuterungen: WB......Warmband | | | | | | | | |
| KB......Kaltband | | | | | | | | |
| WD......Walzdraht, kaltgezogener Draht | | | | | | | | |
| F......Formstahl | | | | | | | | |

TAFEL 3

| Einfluß der Austenitisierungsbedingungen auf die Abschreckhärte graphitisierbarer Stähle | | | | |
|---|---|---|---|---|
| Stahl | Grafitflächenanteil % | Temperatur °C | Haltezeit min | Abschreckhärte HV 30 |
| I | 2,1 | 800 | 20 | 410 |
| I | 2,1 | 850 | 3 | 685 |
| I * | 2,1 | 850 | 10 | 795 |
| I * | 2,1 | 900 | 10 | 790 |
| M | 2,4 | 800 | 20 | 400 |
| M | 2,4 | 850 | 3 | 670 |
| M * | 2,4 | 850 | 10 | 795 |
| M * | 2,4 | 900 | 10 | 795 |

* Erfindungsgemäß

**Ansprüche**

1. Verfahren zur Verbesserung der Kaltumformbarkeit von warm- oder kaltgewalzten vergütbaren Stählen **dadurch gekennzeichnet,** daß bei einer Zusammensetzung von mit (in Gew.-%)

| | |
|---|---|
| 0,32 - | 0,54 % C |
| 0,05 - | 0,40 % Mn |
| 0,41 - | 1,5 % Si |
| 0,02 - | 0,15 % Al |
| maximal | 0,05 % Cr |
| maximal | 0,05 % S |
| maximal | 0,03 % P |
| maximal | 0,02 % N |
| Rest Eisen und unvermeidbare Verunreinigungen | |

vor dem abschließenden Kaltverformen und Vergüten zu einer nahezu vollständigen Graphitisierung mindestens 15 Stunden bei Temperaturen zwischen 620 und 680 °C geglüht wird, während bei einer Zusammensetzung aus

| | |
|---|---|
| 0,55 - | 1,3 % C |
| 0,20 - | 0,30 % Mn |
| 0,41 - | 0,90 % Si |
| 0,02 - | 0,15 % Al |
| maximal | 0,05 % Cr |
| maximal | 0,010 % S |
| maximal | 0,03 % P |
| maximal | 0,02 % N |
| Rest Eisen und unvermeidbare Verunreinigungen | |

diese Glühung mindestens 8 Stunden beträgt.

2. Verfahren nach Anspruch 1,
**dadurch gekennzeichnet,** daß der Stahl zusätzlich mindestens eines der folgenden Elemente enthält (in Gew.-%):

| | |
|---|---|
| bis 1 % | Ni |
| bis 0,5 % | Mo |
| bis 0,10 % | V |
| bis 0,04 % | Ti |
| bis 0,15 % | Zr |
| bis 0,01 % | B |

Europäisches
Patentamt

**EUROPÄISCHER**
**RECHERCHENBERICHT**

Nummer der Anmeldung

**EP 90 11 6741**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | JOURNAL OF HEAT TREATING, Band 6, Nr. 2, 1988, Seiten 97-109, New York, US; D.V. DOANE: "Softening high hardenability steels for machining and cold forming" * Seite 105, Tabelle 4; Seite 106, Teil 6; Seite 108, Teil 8 *<br>– – – | 1-2 | C 21<br>D 1/26<br>C 21 D 1/32 |
| A | METAL SCIENCE AND HEAT TREATMENT, Band 27, Nr. 11-12, November-Dezember 1985, Seiten 848-850, New York, US; V.M. LEONIDOV et cl.: "Preliminary heat treatment of 4KhM2Fch die steel" * Seite 848, Zeilen 1-5,11-16 *<br>– – – | 1 | |
| A | METAL SCIENCE & HEAT TREATMENT, Band 21, Nr. 9-10, September-Oktober 1979, Seite 671, New York, US; V.A. MIROSHNI-CHENKO et al.: "Preliminary heat treatment of castings" * Seite 671, Zeilen 1-5,13-14,18-21 *<br>– – – | 1 | |
| A | METAL PROGRESS, Band 106, Nr. 1, Juni 1974, Seite 167; "Recommended temperatures and time cycles for annealing alloy steels" * Seite 167, Zeilen 46,69 *<br>– – – | 1 | |
| A | "Handbuch der Sonderstahlkunde", Auflage 3, Band 1, 1956, Seiten 227-230,238-240, Düsseldorf, DE; E. HOUDRE-MONT: "Weichglühen", "Spannungsfreiglühen" * Seite 227, Zeilen 14-19; Seite 238, Zeilen 34-39 *<br>– – – | 1 | RECHERCHIERTE SACHGEBIETE (Int. Cl.5)<br><br>C 21 D |
| A | METAL SCIENCE AND HEAT TREATMENT, Band 17, Nr. 5-6, Mai-Juni 1975, Seiten 385-387, New York, US; A.N. KASILOV et al.: "Characteristics of graphite formation with decomposition of austenite in alloy steels"<br>– – –<br>–/– | | |

Der vorliegende Recherchenbericht wurde für alle Patentansprüche erstellt

| Recherchenort | Abschlußdatum der Recherche | Prüfer |
|---|---|---|
| Den Haag | 16 Januar 91 | WITTBLAD U.A. |

**Europäisches
Patentamt**

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | METAL PROGRESS, Band 64, Nr. 7, Juli 1953, Seiten 79-82; O.E. CULLEN: "Continuous short-cycle anneal for spheroidization of cartridge-case steel"<br>– – – | | |
| A,D | DE-C-3 721 641   (THYSSEN STAHL)<br>– – – – – | | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| Den Haag | 16 Januar 91 | WITTBLAD U.A. |